# EUROPEAN PATENT APPLICATION

(11) **EP 4 641 107 A1**
(43) Date of publication of application: **29.10.2025**
(21) Application number: 24172714.8
(22) Date of filing: 26.04.2024
(51) Int. Cl.: F24H 1/16, A47J 31/54, H05B 3/48, F24H 9/1818

(54) **HELICAL DYNAMIC FLOW HEATER**

(71) Applicant: Bleckmann GmbH & Co. KG, 5112 Lamprechtshausen (AT)
(72) Inventor: HÖFER, Johann, 5112 LAMPRECHTSHAUSEN (AT); GÖSCHL, Bernhard, 5112 LAMPRECHTSHAUSEN (AT); REICHL, Martin, 5112 LAMPRECHTSHAUSEN (AT)
(74) Representative: Eisenführ Speiser

(57) **Abstract**

A heating unit for use in an apparatus for preparing a liquid for human consumption, the heating unit comprising at least a first helically wound tubular flow heater and at least a second helically wound tubular flow heater, wherein a connection conduit is provided for fluidly connecting a fluid outlet of the first tubular flow heater with a fluid inlet of the second tubular flow heater. Also provided is a heating unit comprising at least a first helically wound tubular flow heater with a core positioned within an interior volume enclosed by a plurality of windings of the tubular flow heater. Also provided is method for preparing a fluid for human consumption.

## Description

### FIELD

The disclosure relates to heating units with helical dynamic flow heaters, methods for preparing fluids for human consumption, and related devices and methods.

### BACKGROUND

In hot beverage preparation apparatuses like coffee machines, for example, electrical heating devices having an electrical power of several hundred watts up to more than 1 or 2 kW are used to produce hot water and/or steam for preparing a beverage, or other liquids for human consumption. Controlling of such high heating power in order to produce a certain amount or a certain flow of water or steam having a specific temperature necessary to satisfy predetermined quality requirements is a challenging problem.

One type of a common heating device comprises a kind of electrical heated massive thermo block having a relatively heavy body made of aluminum, for example, through which the fluid is guided and which provides a high thermal inertia so that controlling the temperature of the fluid is relatively easy because of the slow thermal reaction of the heating device in spite of the high electrical power. This device provides a uniform heat flow rate distribution and a relatively constant fluid temperature when a slow switching controller is used for controlling the electrical heating power. However, the high thermal inertia results in a long heating-up period when activating the beverage preparation apparatus so that usability of the apparatus is affected. If, on the other hand, the heating device is operated in a standby mode so as to hold a predetermined higher temperature and shorten the heating-up period, then energy is wasted. Furthermore, a lot of heat energy is provided to the thermal block during the heating-up period and uselessly lost when the apparatus is switched off and cools down. Moreover, it is necessary to design a whole new special thermo block heating device for each application according to the requirements with respect to heating power, specific thermal load of surfaces and the like.

Other heating devices are known which dispense with massive thermos blocks, and instead employ electrical heating elements which extend along a fluid conduit so that the liquid is gradually heated while flowing through the fluid conduit. While generally a more energy efficient solution, the comparatively long fluid conduit makes for bulkier heating devices, which may not be suitable for all applications. Moreover, some applications require particularly careful heating of the liquid, meaning that the liquid must not be heated too quickly. This may be a safety requirement, for example to prevent unintended boiling with potentially dangerous spikes in pressure, or it may be a requirement of the beverage to be prepared, for example to preserve or enhance flavor. Dispensing with a massive thermos block however also dispenses with the dampening properties of the associated thermal inertia. Thus, heating devices which instead employ electrical heating elements extending along a fluid conduit are generally not well suited for such applications.

It is therefore an object of the present disclosure to provide a heating unit which addresses at least some of the aforementioned challenges.

### SUMMARY

The disclosed technology pertains to heating units, specifically to heating units for use in an apparatus for preparing a liquid for human consumption, such as in a hot beverage apparatus, including but not limited to a coffee machine, a tea kettle or similar.

As per the disclosed technology, a tubular flow heater helically wound around a longitudinal axis is provided. The tubular flow heater comprises a fluid conduit for passage of a liquid to be heated, the fluid conduit extending between a fluid inlet and a fluid outlet. The tubular flow heater further comprises an electric heating element extending at least partially along the fluid conduit between the fluid inlet and the fluid outlet, the electric heating element arranged in thermal contact with the fluid conduit.

The tubular flow heater of the disclosed technology is advantageously compact and can be adapted to different geometric requirements by varying the diameter and/or the length of the helix, or by providing the helix with a non-circular shape such as an elliptical shape, for example. Furthermore, the tubular flow heater can be adapted to differing requirements with respect to heating power, heated surface area, and specific thermal area loading, by scaling the length of the conduit and the corresponding heating power of the heating element. To this, the same basic components can be produced with the same tools (extruding tools for example) in different lengths, thus avoiding costly redesign of tools or produced components. With the tubular flow heater it is easy to define an optimum ratio of conduit length and heating power to optimize heating-up periods and avoid bubble generation, for example, to comply with requirements of the specific application.

Furthermore, the tubular flow heater of the disclosed technology can provide a building block for modular heating units, thereby simplifying manufacture of differently adapted heating units from a limited number of components.

In an aspect of the disclosed technology, a heating unit is provided, which comprises:
a first tubular flow heater comprising:
   a first fluid conduit for passage of a liquid to be heated, the first fluid conduit extending between a first fluid inlet and a first fluid outlet; and
   a first electric heating element extending at least partially along the first fluid conduit between the first fluid inlet and the first fluid outlet, the first electric heating element arranged in thermal contact with the first fluid conduit;
   wherein the first fluid conduit and the first heating element are helically wound around a common first longitudinal axis;
a second tubular flow heater comprising:
   a second fluid conduit for passage of the liquid to be heated, the second fluid conduit extending between a second fluid inlet and a second fluid outlet; and
   a second electric heating element extending at least partially along the second fluid conduit between the second fluid inlet and the second fluid outlet, the second electric heating element arranged in thermal contact with the second fluid conduit;
   wherein the second fluid conduit and the second heating element are helically wound around a common second longitudinal axis; and
a connection conduit for passage of the liquid to be heated, the connection conduit fluidly connecting the first fluid outlet with the second fluid inlet.

The aforementioned aspect advantageously provides heating units capable of being employed in a wide number of applications. In particular, its modular design using sequentially connected, tubular heating units simplifies manufacture of differently adapted heating units from a limited number of components. Moreover, by means of the two electric heating elements, the aforementioned aspect allows to tailor a heating profile which the liquid is subjected to when flowing from the first fluid inlet to the first fluid outlet, and then from the second fluid inlet to the second fluid outlet, to a wide variety of applications. In other words, the tubular flow heater advantageously forms the building block of a wide variety of differently adapted heating units.

In a further aspect of the disclosed technology, a heating unit is provided which comprises:
at least a first tubular flow heater comprising:
   a first fluid conduit for passage of a liquid to be heated, the first fluid conduit extending between a first fluid inlet and a first fluid outlet; and
   a first electric heating element extending at least partially along the first fluid conduit between the first fluid inlet and the first fluid outlet, the first electric heating element arranged in thermal contact with the first fluid conduit;
   wherein the first fluid conduit and the first heating element are helically wound around a common first longitudinal axis, thereby forming a plurality of windings enclosing a first interior volume; and
a core positioned within the first interior volume and having a lateral surface circumferentially extending around the first longitudinal axis;
wherein the lateral surface of the core contacts an inner surface of the plurality of windings over an arc length corresponding to at least one full winding.

The aforementioned aspect advantageously provides heating units capable of being employed in a wide number of applications. Its modular design using a tubular flow heater in thermal contact with a core simplifies manufacture of differently adapted heating units from a limited number of components. In particular, the core advantageously serves as a heat sink which dampens the temperature profile which the liquid is subjected to when flowing from the first fluid inlet to the first fluid outlet, that results from a given amount of electric power supplied to the first electric heating element. By changing a thermal mass of the core and/or changing the arc length over which the core contacts the inner surface of the plurality of windings, the temperature profile of the liquid can be tailored to a wide variety of different applications, without changing the tubular flow heater. In other words, by pairing it with a suitable core, the tubular flow heater advantageously forms the building block of a wide variety of differently adapted heating units.

In a further aspect of the disclosed technology, an apparatus for preparing a liquid for human consumption is provided, the apparatus comprising any kind of heating unit as described herein, preferably of any other aspect or any particular example or implementation thereof as described herein. In some implementations, the apparatus is an apparatus for preparing a hot beverage, such as one of a coffee machine, a tea kettle or similar. In some implementations, the apparatus is a steam cooker. In other implementations, the apparatus is adapted to selectively operate as a coffee machine and/or a tea kettle and/or a steam cooker.

The above summary of the disclosed technology is not intended to be limiting. Other alternative or additional aspects of the disclosed technology are described in the following with reference to the attached drawings. The applicant reserves the right to file divisional applications claiming aspects that are not part of the appended claims or the foregoing summary.

### BRIEF DESCRIPTION OF THE DRAWINGS

In the following, further aspects, implementations and examples of the disclosed technology are described in conjunction with the attached drawings. Thereby, the expressions left, right, below and above are referred to the drawings in an orientation of the drawings which allows the normal reading of the reference numbers, but do not necessarily define a position or orientation of the features or components with respect to manufacturing or operation, unless explicitly stated. The skilled reader will immediately recognize that the attached drawings are derived from CAD models, and as such, are to scale. The combinations of absolute and relative dimensions reproduced in the attached drawings are representative of the depicted particular aspects, implementations and examples, and as such are not limiting or essential for the disclosed technology.
- Fig. 1: is a perspective view of a heating unit according to a specific implementation;
- Fig. 2A: is a perspective view of a heating unit according to another specific implementation;
- Fig. 2B: is a side view of the heating unit of Fig. 2A;
- Fig. 3A: is a perspective view of a specific implementation of a housing for a heating unit;
- Fig. 3B: is a perspective view of a specific implementation of an electrical heating element for a heating unit;
- Fig. 3C: is a perspective view of a specific implementation of a fluid pipe for a heating unit;
- Fig. 4: is a top view of a specific implementation of a core for a heating unit;
- Fig. 5A: is a perspective view of a specific implementation of a safety device assembly for a heating unit;
- Fig. 5B: is a perspective view of a specific implementation of a casing for a safety device assembly for a heating unit;
- Fig. 5C: is a perspective view of a specific implementation of a safety device for a heating unit;
- Fig. 6: is a cross-sectional view of a specific implementation of a heating unit;
- Fig. 7: is a cross-sectional view of a specific implementation of a tubular flow heater for a heating unit;
- Fig. 8: is a perspective view of a specific implementation of a resistive heater for a heating element of a heating unit;
- Fig. 9: is a cross-sectional view of another specific implementation of a tubular flow heater for a heating unit; and
- Fig. 10: is a perspective view of another specific implementation of a resistive heater for a heating element of a heating unit.

### DETAILED DESCRIPTION OF SPECIFIC EXAMPLES

In the following sections, further aspects, implementations and examples of the disclosed technology are described in conjunction with the attached drawings. Titles are provided for each of the following sections to enhance readability. The titles are not intended to be limiting for the disclosed technology. It is understood from the technical content of the following description that aspects, implementations and examples described in different sections are readily combinable, even where such a combination is not explicitly mentioned. Moreover, even though some elements are shown in combination in the attached drawings, these elements can generally also be present isolated from one another in other implementations. Insofar the following description suggests a link between different elements shown in combination in the attached drawings, such link is not to be considered inextricable unless an indispensable technical requirement exists for such a combination.

### Heating Unit

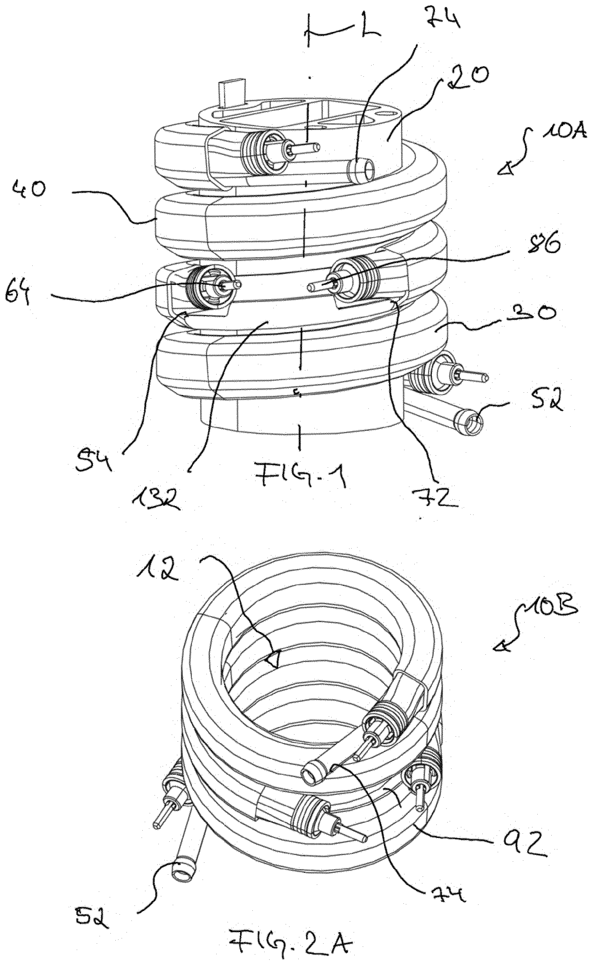

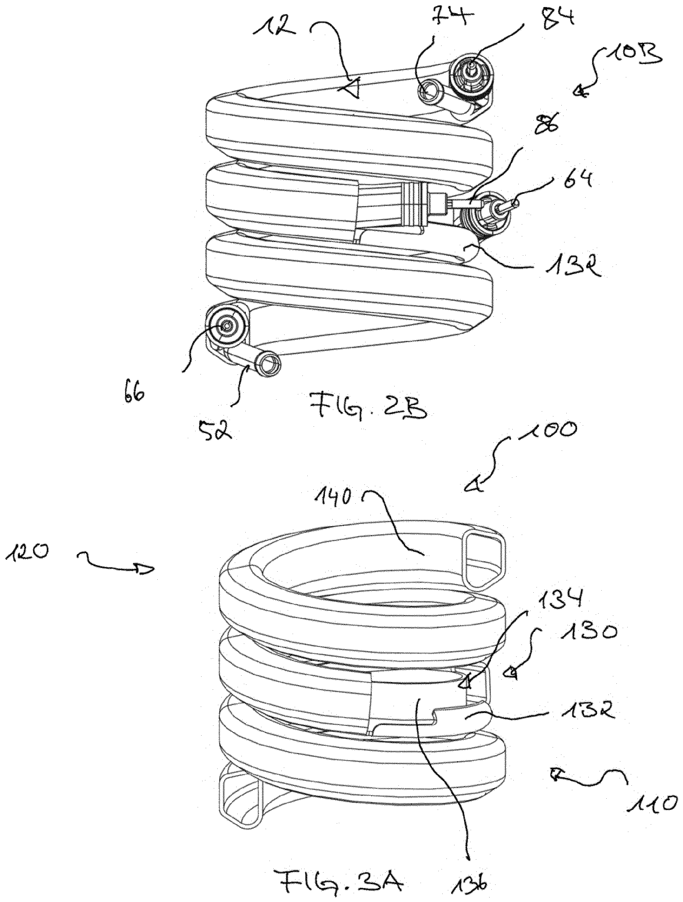

Specific aspects and implementations of heating units according to the disclosed technology are described hereafter in particular with reference to Figs. 1, 2A and 2B. As will become clearer from the following description, heating units according to the disclosed technology are not limited to the specific examples depicted in Figs. 1, 2A and 2B. In particular, it is not necessary that heating units according to the disclosed technology comprise all elements depicted in or described in conjunction with Figs. 1, 2A and 2B, or that such elements - if present - are provided in the exact configuration and/or dimensions depicted in or described in conjunction with Figs. 1, 2A and 2B.

According to an aspect of the disclosed technology, a heating unit comprises a first tubular flow heater and a second tubular flow heater. Each of the tubular flow heaters comprises a fluid conduit for passage of a liquid to be heated, extending between a respective fluid inlet and fluid outlet. Each of the tubular flow heaters also comprises an electric heating element extending at least partially along the respective fluid conduit. The outlet of the first tubular flow heater is connected to the outlet of the second tubular flow heater by a connection conduit for passage of liquid to be heated. The fluid conduits and heating elements of the first and second tubular flow heaters are each helically wound around a respective first and second longitudinal axis.

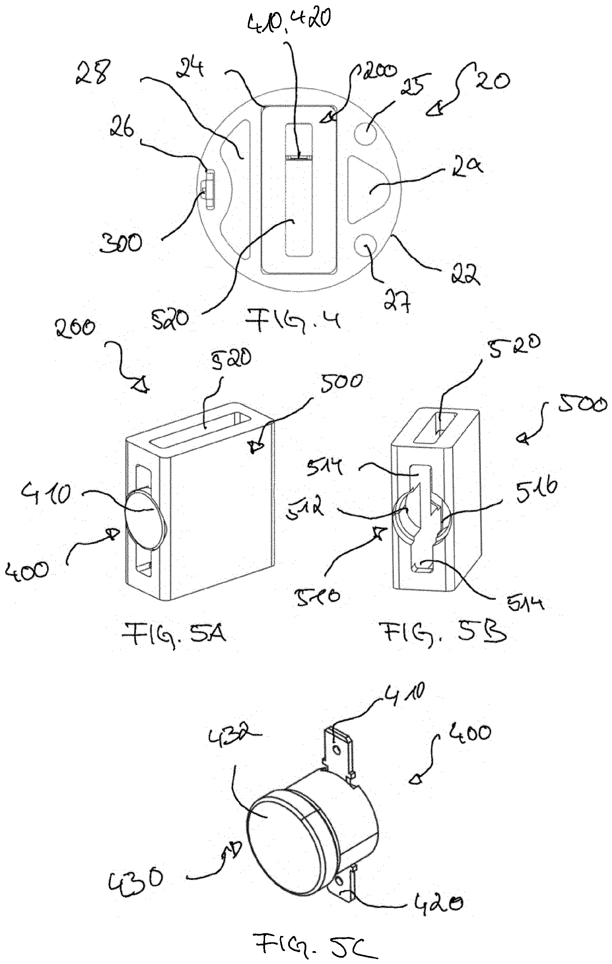

Figs. 1, 2A and 2B depict specific examples of heating units according to the aforementioned aspect. Heating unit 10A of Fig. 1 and heating unit 10B of Figs. 2A and 2B only differ in that heating unit 10A comprises a core 20 positioned in an interior volume 12 enclosed by the helical winding of first tubular flow heater 30 and second tubular flow heater 40 around shared longitudinal axis L. Thus, identical reference signs are used in Figs. 1, 2A and 2B to denote elements which are identically shared by these two specific examples. Specific examples and implementations of a core will be described below with reference to Figs. 4 and 5A to 5C.

Even though the specific examples of Figs. 1, 2A and 2B comprise two tubular flow heaters 30, 40, other examples of the disclosed technology comprise a different number of tubular flow heaters. In particular, in an aspect of the disclosed technology, a heating unit is provided with at least a first tubular flow heater helically wound around a longitudinal axis, with a core positioned in an interior volume enclosed by the helical winding of the first tubular flow heater. In some examples of this aspect, only the first flow heater is provided. In other examples, as depicted in Fig. 1, two helically wound flow heaters are combined with a core positioned in an interior volume of at least one of the two flow heaters. In yet further examples, more than two flow heaters are combined with a core positioned in an interior volume of at least one of the three flow heaters.

In the specific examples of Figs. 1, 2A and 2B, the geometric parameters of the helical winding of flow heaters 30, 40 are essentially identical. That is, they share the same helix diameter defined perpendicular to longitudinal axis L, and the same helix pitch defined parallel to longitudinal axis L. Moreover, in the depicted specific examples, flow heaters 30, 40 are helically wound around shared longitudinal axis L, i.e. they are coaxial. The geometric parameters of the helical winding of the depicted specific examples of flow heaters 30, 40 are also constant over their respective longitudinal extent in the direction of longitudinal axis L. In other examples, the helix formed by one of the flow heaters may have a different helix pitch and/or helix diameter than the helix or helices of any one or more of the other flow heaters. In some examples, the helices of any one or more of the flow heaters may have a variable helix pitch and/or helix diameter over their respective longitudinal extent in the direction of their respective longitudinal axis. In some examples, the helix of one or more of the flow heaters is not coaxial with any one or more of the other flow heaters.

Further specific examples and implementations of tubular flow heaters and their components will be described below in particular with further reference to Figs. 3A to 3C and 6 to 10.

### Method of heating a fluid

The disclosed technology also provides a method of preparing a fluid for human consumption, for example by heating. In some examples, the method is performed by any of the heating units described herein. As such, the methods described herein can also be understood as methods of operating any of the heating units described herein. According to an aspect of the disclosed methods, the fluid having a first temperature is supplied to a helically shaped first fluid conduit through a first inlet. The fluid passes through the first fluid conduit from the first inlet to a first outlet of the first fluid conduit and is subjected to at least a first heat flow rate (defined as an amount of heat energy transferred over a unit area over a unit of time) at a wall of the first fluid conduit. In some examples, the first heat flow rate increases the temperature of the fluid so that it exits the first outlet having a second temperature that is greater than the first temperature. The fluid is subsequently supplied to a helically shaped second fluid conduit through a second inlet. The fluid passes through the second fluid conduit from the second inlet to a second outlet of the second fluid conduit and is subjected to at least a second heat flow rate (defined as an amount of heat energy transferred over a unit area over a unit of time) at a wall of the second fluid conduit. In some examples, the second heat flow rate increases the temperature of the fluid so that it exits the second outlet having a third temperature that is greater than the second temperature. The first and second heat flow rates can be different or equal, as further detailed below.

Specific aspects and implementations of methods according to the disclosed technology are further described hereafter in particular with reference to the specific examples of heating units shown in Figs. 1, 2A, 2B and 6.

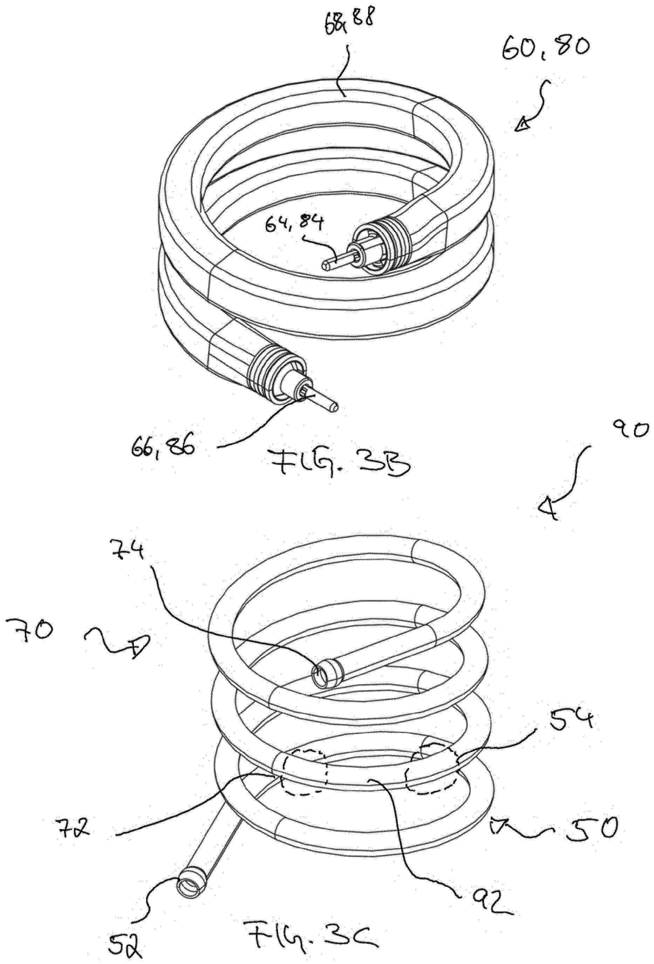

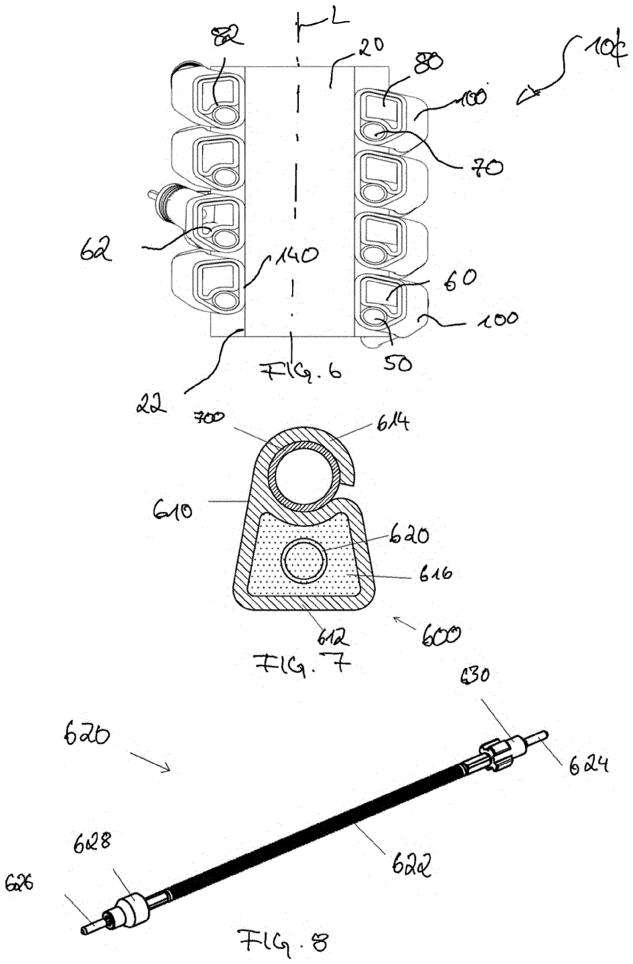

In the specific examples of Figs. 1, 2A, 2B and 6, first flow heater 30 comprises a first fluid conduit 50 and a first heating element 60. Likewise, second flow heater 40 comprises a second fluid conduit 70 and a second heating element 80. In the specific examples of Figs. 1, 2A, 2B and 6, the design of first flow heater 30 and second flow heater 40 is such that the first fluid conduit 50 is essentially identical in shape and dimensions as the second fluid conduit 70, and such that first heating element 60 is essentially identical in shape and dimensions as the second heating element 80. Fig. 6 shows an exemplary cross section of another specific example of a heating unit 10C, depicting an example of a heating unit with first and second heating elements 60, 80 and first and second fluid conduits 50, 70 which are identical in shape and dimensions. In other examples, shape and/or dimensions of fluid conduits and/or of flow heaters can differ between the flow heaters. Other specific examples of heating elements and their components will be described below with reference to Figs. 3B and 7 to 10.

Fig. 6 also shows a specific example of how the first and second heating elements 60, 80 are arranged in thermal contact with first and second fluid conduits 50, 70, respectively. In the depicted exemplary configuration, the cross section of the first and second heating elements 60, 80 is adapted to provide a fluid conduit receiving portion 62, 82, which is in contact with a portion of first and second fluid conduits 50, 70, respectively. In some examples, such as the one shown in Fig. 6, fluid conduit receiving portions 62, 82 are indented segments of an outer periphery of first and second heating elements 60, 80, which receive an arcuate segment of the at least partially rounded, preferably circular, first and second fluid conduits 50, 70. Thereby, the heat transfer between first and second heating elements 60, 80 and first and second fluid conduits 50, 70 is advantageously improved.

With reference in particular to Figs. 1, 2A, 2B and 6, in an exemplary method of preparing a fluid for human consumption by heating, for example in a method for making tea or coffee, the fluid having a first temperature is supplied to a first inlet 52 of first fluid conduit 50, and subjected to a first heat flow rate provided by the first heating element 60 while passing through first fluid conduit 50 towards a first outlet 54 of first fluid conduit 50. The first heat flow rate continuously increases the temperature of the fluid such that it exits through the first outlet 54 at a second temperature that is higher than the first temperature. The fluid is then passed through a connection conduit 92 and into a second inlet 72 of second fluid conduit 70, where it is subjected to a second heat flow rate provided by the second heating element 80, while passing towards a second outlet 74 of second fluid conduit 70. The second heat flow rate continuously increases the temperature of the fluid such that it exits through the second outlet 74 at a third temperature that is higher than the second temperature. Specific examples and implementations of first and second fluid conduits will be described below in particular with reference to Fig. 3C.

Depending on the specific implementation, the first and second heat flow rates can be identical or different. For example, the first heat flow rate can be higher than the second heat flow rate to allow a fast increase in temperature from the first temperature to the second temperature, while the final heating stage to the third temperature can be slower. Such a heating profile can be particularly advantageous with flavors which are sensitive to high temperatures, such as in coffee or tea. A slower final heating stage can advantageously help to prevent the third temperature from exceeding a critical threshold.

In some implementations, the first and/or second heat flow rate can be zero. This can be particularly advantageous when the heating unit is part of a multifunctional beverage preparation apparatus. For example, in some implementations, the beverage preparation apparatus can be adapted to selectively prepare at least a first beverage and a second beverage from a fluid supplied at a first temperature, wherein the first beverage is heated to a second temperature and the second beverage is heated to a higher third temperature. When the first beverage is prepared, only the first heating unit is supplied with electrical power so that the fluid is heated to the second temperature when passing through the first fluid conduit, but not heated any further when passing through the second fluid conduit. In some examples, additionally the second heating unit is supplied with electrical power, so that the second heat flow rate is non-zero. In some examples, the second heat flow rate increases the temperature of the fluid from the second temperature to the higher third temperature when passing through the second fluid circuit, preferably to prepare the second beverage. In other examples, the second heat flow rate is non-zero, but adapted so that the fluid maintains the second temperature when passing through the second fluid conduit. Thus, it may advantageously be ensured that the fluid does not cool off when passing through the second fluid conduit, and is reliably provided at the second fluid outlet at the second temperature. Such an implementation may also advantageously increase the time for which the fluid is held at the second temperature, which may beneficially help to develop flavor in some beverages, such as coffee or tea.

In alternative implementations, the first and/or second heat flow rate is negative. In such implementations, the unit can be referred to as a cooling unit, with flow coolers instead of flow heaters. In such implementations, the first and/or second electrical heating elements are replaced with suitable cooling elements as generally known in the art.

In some implementations, the first and/or second heat flow rate is adapted to boil the fluid. Such implementations are also exemplary for a situation in which different cross-sectional areas between the first and second fluid conduits are desired, in particular to account for the change in specific volume occurring when boiling the fluid. For example, in some implementations, the first heat flow rate is adapted to heat the fluid supplied at the first inlet at the first temperature to a second temperature which is at or below the boiling temperature. Regardless of the specific implementation, the fluid can for example be water. In some implementations, the second heat flow rate can be adapted to boil the fluid. In some implementations, the second heat flow rate can be adapted so that the boiled fluid, now turned steam, is provided at the second fluid outlet at a third temperature that is higher than the second temperature, preferably the boiling temperature of the fluid. Heating the steam to a third temperature higher than the boiling temperature of the fluid can advantageously ensure that the steam does not immediately re-condense upon exiting the second fluid outlet. Providing steam may be particularly advantageous in certain applications, such as when steaming food. Thus, the methods and devices of the disclosed technology are not limited to the preparation of beverages, but are likewise suitable for food preparation.

In some implementations, the cross-sectional area of the first fluid conduit is constant along its length. In some implementations, the cross-sectional area of the second fluid conduit is constant along its length. In some implementations, the cross-sectional areas of the first fluid and second conduits are identical.

In some implementations, such as those depicted e.g. in Figs. 1, 2A, 2B and 6, the heating unit 10A, 10B is adapted such that the first inlet 52 is provided at a lower height than the first outlet 54 and/or the second inlet 72. The first inlet 52 can also be provided at a lower height than the second outlet 74. Preferably, the heating unit is oriented in such a manner when mounted in an apparatus for the preparation of food or beverages. Such an orientation can advantageously facilitate venting or deaerating the system. Moreover, such an orientation can advantageously make use of forced convection to cause the fluid to flow from the first inlet 52 to the second outlet 74. With the increase in temperature, the fluid is convectively forced upwards, advantageously reducing a pumping power required to transport the fluid from the first inlet 52 to the second outlet 74.

In some implementations, the first and/or second heat flow rate are constant along the respective helical arc lengths (or simply length) of the first and/or second tubular flow heaters. In other implementations, the first and/or second heat flow rate are variable along the respective helical arc lengths of the first and/or second tubular flow heaters. For example, the first and/or second heat flow rate may increase or decrease along the respective helical arc lengths of the first and/or second tubular flow heaters. For example, an increasing heat flow rate along the respective helical arc lengths, and thus along the longitudinal axis L from bottom to top, can advantageously contribute to the forced convection of the fluid.

Additional or alternative implementations of heating units and methods of the disclosed technology will also be apparent from the further description below.

### Components of tubular flow heaters

Specific implementations of tubular flow heaters are described hereafter with reference in particular to Figs. 3A to 3C and 6 to 10. In the depicted implementations, the first and second flow heater 30, 40 are provided in the form of a combined flow heater assembly comprising a single continuous flow pipe 90 (Fig. 3C), a heating assembly housing 100 (Fig. 3A) and two generally identical heating units 60, 80 (Fig. 3B). Such a configuration advantageously allows to manufacture a staged heating unit according to the present technology using fewer parts.

In the specific example of Fig. 3C, the first and second fluid conduits 50, 70 as well as the connection conduit 92 are provided in the form of different sections of the same continuous flow pipe 90. As such, in this implementation, the first outlet 54 and the second inlet 72 are no physically distinguishable orifices of flow pipe 90. Instead, in this implementation, the first outlet 54 denotes a location along flow pipe 90 in the direction of fluid flow (from first inlet 52 to second outlet 74), at which the first heating element 60 is no longer in contact with flow pipe 90. Similarly, the second inlet 72 denotes a location along flow pipe 90 in the direction of fluid flow (from first inlet 52 to second outlet 74), at which the second heating element 80 begins to be in contact with flow pipe 90. The connection conduit 92 is consequently defined as the portion flow pipe 90 between the first and second heating elements 60, 80, along which neither the first nor second heating element is in contact with flow pipe 90.

In other implementations, any one or more of the first and second fluid conduits 50, 70 as well as the connection conduit 92 are provided in the form of separate pieces of pipe which are permanently or removably connected. For example, threaded connections may be used to connect connection conduit 92 to first and/or second fluid conduits 50, 70. Alternatively or additionally, a permanent connection such as by welding or soldering may be used to connect connection conduit 92 to first and/or second fluid conduits 50, 70. In such implementations, although resulting a monolithic flow pipe, welding or soldering lines may indicate the location of the first outlet 54 and/or the second inlet 72. Preferably, and regardless of the specific implementation, any one or more of the first and second fluid conduits 50, 70 as well as the connection conduit 92 are formed from aluminum.

In some implementations, the first and second fluid conduits and/or the first and second heating elements are situated in a shared housing. A specific example of such a housing is shown e.g. in Fig. 3A with reference number 100, and can also be seen in cross-section in Fig. 6. Housing 100, in some implementations, has three distinct sections. A first or lower section 110 is configured to house the portion of flow pipe 90 forming the first fluid conduit 50 and to house the portion of first heating element 60 which is in contact with flow pipe 90. A second or upper section 120 is analogously configured to house the portion of flow pipe 90 forming the second fluid conduit 70 and to house the portion of second heating element 80 which is in contact with flow pipe 90. A third or intermediate section 130 houses the portion of flow pipe 90 which forms the connection conduit 92. In alternative implementations, no housing is provided.

In the depicted specific implementation, housing 100 is formed from a single continuous piece of material, preferably aluminum. In other implementations, housing 100 can be provided in the form of separate sections. For example, first section 110 can be provided separately from second section 120, in some implementations without any interconnecting intermediate section 130. In other implementations, the first, second and/or third section 110, 120, 130 can be provided as separate pieces of material, which are permanently or removably connected. For example, welding or soldering may be used to permanently connect the first, second and/or third section 110, 120, 130 to form housing 100. In such implementations, although resulting a monolithic housing 100, welding or soldering lines may allow to distinguish between the originally separated pieces of material.

In the depicted specific implementation, as can be inferred e.g. from Figs. 3A and 6, housing 100 forms a closed cross-sectional shape along the first and second sections 110, 120. In some implementations, as can be inferred e.g. from Figs. 3A and 6, third section 130 is provided as a section of open cross-sectional shape. Specifically, third section 130 can provide a shielding portion 132 which partially surrounds connection conduit 92, and an open portion 134 which provides access to electrical contact terminals 64, 86 of heating elements 60, 80 (cf. e.g. Figs. 1, 2A, 2B). Shielding portion 132 can advantageously reduce a heat loss occurring along connection conduit 92, when the fluid passes from first outlet 54 to the second inlet 72. Alternatively or additionally, shielding portion 132 advantageously prevents contact of other components with an outer surface of connection conduit 92.

A specific example of an electrical heating element 60, 80 is depicted in Fig. 3B, and generally comprises at least one resistive heater (not depicted in Fig. 3B), such as a heating coil, embedded in a heat-conductive electrically insulating material (not depicted in Fig. 3B), such as siliconized magnesium oxide (MgO), and surrounded by a casing tube 68, 88. The at least one resistive heater extends between respective electrical contact terminals 64, 84 and 66, 86 on either end of electrical heating element 60, 80. Further details and specific implementations and examples of electrical heating elements and tubular flow heaters are described below with reference to Figs. 7 to 10.

In some implementations, the at least first and second electrical heating elements are wired in parallel. With reference to Figs. 1, 2A and 2B, such parallel wiring would mean that, for example, terminals 64 and 84 are connected to the same first electric potential (such as a supply voltage) and terminals 66 and 86 are connected to the same second electric potential (such as ground), so that the same voltage is applied over each of the at least two electrical heating elements. Other parallel wiring schemes resulting in an identical voltage drop over each of the at least two electrical heating elements as known from the art are likewise suitable. In implementations with identical heating elements, the identical voltage drop would result in an identical heating power. Consequently, both the first and second heat flow rate would be identical.

In other implementations, the at least first and second electrical heating elements are wired in series. With reference to Figs. 1, 2A and 2B, such serial wiring would mean that, for example, terminals 66 is connected to a first electric potential (such as a supply voltage), terminals 84 is connected to a second electric potential (such as ground), and terminals 64 and 86 are connected to one another, so that the voltage drop from the first to the second electric potential is distributed over the at least two electrical heating elements according to their respective resistances. Other serial wiring schemes resulting in resistance proportional voltage drop over each of the at least two electrical heating elements as known from the art are likewise suitable. In implementations with identical heating elements, half of the voltage drop would occur over each of the two electrical heating elements. Consequently, both the first and second heat flow rate would be identical.

Comparing serial wiring and parallel wiring of identical heating elements with using a single such heating element demonstrates further advantageous applications of the disclosed technology. A parallel connection of two identical heating elements results in double the heating power compared with a single such heating element at the same supply voltage. In this case, each of the two heating elements connected in parallel produces the same heating power as a single identical heating element subjected to the same supply voltage. A serial connection of two identical heating elements results in half the heating power compared with a single such heating element at the same supply voltage. In this case, each of the two heating elements connected in series is subjected to half the input voltage and subsequently produces a quarter of the heating power of a single identical heating element subjected to the same supply voltage (with the full voltage drop occurring over the single heating element). Thus, the disclosed technology advantageously facilitates adapting the total heating power of the heating unit to different applications.

### Core for heating unit

Specific examples and implementations of a core for any of the heating units disclosed herein will be described below with reference to Figs. 4, 5A to 5C and 6.

In the depicted implementation, core 20 is provided as a cylindrical piece of material, preferably made from aluminum. In some implementations, the core is placed in an interior volume enclosed by a helically wound tubular flow heater, and connected thereto using welding or soldering. In some implementations, such as depicted e.g. in Figs. 3A and 6, helical windings of a tubular flow heater enclose a cylindrical interior volume. For example, a radially inner surface 140 of a first and/or second tubular flow heater 30, 40 is adapted to contact a lateral (or radially outer) surface 22 of core 20. In the depicted specific examples, radially inner surface 140 is parallel to longitudinal axis L of the helix formed by first and/or second tubular flow heater 30, 40, which is also coincident with a longitudinal axis of the cylindrical core. Thus, contact between radially inner surface 140 and lateral surface 22 is advantageously facilitated. As can be inferred from Fig. 3A, radially inner surface 140 in the depicted specific examples is provided by housing 100. In other examples, such as those without a housing, radially inner surface 140 can be provided by heating elements 60, 80 and/or fluid conduits 50, 70.

Core 22 can serve as a heat sink or thermal mass as described hereinabove. To this end, a lateral surface of a core according to the disclosed technology contacts an inner surface of a helically wound tubular flow heater over an arc length corresponding to at least one full winding. Therefore, in some implementations, a height of the core in a direction of the longitudinal axis of the helical winding corresponds to a height of the helical winding at a given helix pitch. In some implementations, the core itself can be provided in the form of a helical structure, preferably mirroring the pitch of the helical tubular flow heater. In some implementations, a diameter of the core as defined perpendicular to its longitudinal axis matches an inner diameter of the helically helical tubular flow heater. In some implementations, a cross-sectional shape of the core as defined in a plane perpendicular to its longitudinal axis matches the cross-sectional shape of an inner surface of the helical tubular flow heater. Thus, in the implementation shown in Fig. 4 adapted for use with a cylindrical helix, a cross-section of core 22 has a circular outer shape. Regardless of the specific implementation, a core according to the disclosed technology is preferably made of metal, such as aluminum, or an aluminum alloy.

Alternatively or additionally, a core of the disclosed technology can be configured to house one or more auxiliary devices, such as sensors and/or safety devices. In some implementations, the core comprises one or more receiving portions (such as one or more slots, channels, or recesses), configured to receive the one or more auxiliary devices. A specific implementation of such a core is depicted in Fig. 4, which provides a top view of core 20. In this implementation, a slot 24 is shaped to receive a safety device assembly 200 (shown in Fig. 5A). In specific implementations, such as shown in Fig. 4, slot 24 is a central slot, meaning it is substantially coaxial with the central longitudinal axis of core 20. In implementations with a generally rounded or even circular cross section, such as depicted in Fig. 4, a centrally placed slot provides a larger available cross sectional (and thus volume) than an off-center slot.

In the depicted specific implementation, the receiving portions are provided in the form of slots or channels extending along the core's longitudinal axis from a top surface to a bottom surface of the core. Such implementations advantageously allow access to the receiving portions from either side of the core, which may facilitate manufacture. In other implementations, one or more of the receiving portions can be provided in the form of recesses in the top and/or bottom surface of the core, which do not extend through the entire length of the core. Such implementations may advantageously minimize the volume that is removed from the core to produce the recesses, maintaining a larger portion of the core's thermal mass than full-length channels or slots.

With reference to Figs. 5A to 5C, a specific implementation of safety device assembly 200 comprises a safety device 400 (shown in isolation in Fig. 5C) and a casing 500 (shown in isolation in Fig. 5B). Casing 500 comprises a receiving portion 510 configured to receive safety device 400. In some implementations, such as the depicted one, receiving portion 510 is a recess in a lateral surface of casing 500 shaped to provide a form fit for safety device 400. Regardless of the specific implementation, casing 500 is optionally made from a suitable polymer.

In some implementations, such as the depicted one, safety device 400 is provided in the form of an electro-mechanical fuse configured to cut an electric connection between input terminal 410 and output terminal 420 if the temperature detected at fuse portion 430 exceeds a predetermined threshold. In some implementations, fuse portion 430 is generally cylindrical, with a top surface 432 acting as a temperature sensing portion. Typically, the temperature sensing portion is provided to detect a temperature of one or more of the heating elements, to prevent overheating thereof, e.g. in case the heating unit runs dry. Casing 500 is, in some implementations, configured to position the sensing portion close to the lateral close to outer peripheral surface 22, to minimize a difference in the temperature sensed by the temperature sensing portion and the temperature of one or more heating elements. In some implementations, this is achieved by providing a casing 500 with an oblong cross-section, such as the depicted rectangular cross-section, and placing receiving portion 510 such that fuse portion 430 is positioned at a lateral surface of a shorter side of the oblong cross-section. As a result, fuse portion 430 is offset further from the central longitudinal axis as would be the case if it was positioned at a lateral surface of a longer side of the oblong cross-section. When positioned within the core, such as depicted in Fig. 4, fuse portion 430 and its top surface 432 are therefore positioned closer to lateral surface 22 than to the central longitudinal axis.

In some implementations, such as depicted in Figs. 5A to 5C, input terminal 410 and output terminal 420 extend from an end of fuse portion 430 opposite top surface 432, and extend in opposite directions and substantially perpendicular to a central longitudinal axis of fuse portion 430. Advantageously, the shape of receiving portion 510 resembles the shape of safety device 400, with a central portion 512 configured to receive fuse portion 430 and a pair of lateral extending portions 524 configured to receive a respective one of input terminal 410 and output terminal 420. In some implementations, such as depicted in Figs. 5A and 5B, central portion 512 also comprises an abutting portion 516, placed at a depth such that when safety device 400 is placed in receiving portion 410, top surface 432 is substantially flush with a lateral surface of casing 500. Optionally, casing 500 is provided with a second receiving portion positioned at the lateral side of casing 500 that is shielded from view in Fig. 5A. This may advantageously allow to provide a second safety device, or may contribute to simplifying manufacture.

Moreover, in some implementations, such as depicted in Figs. 4, 5A and 5C, casing 500 comprises a centrally extending slot 520. Advantageously, slot 520 connects to receiving portion 510 such that input terminal 410 and output terminal 420 extend into centrally extending slot 520, when safety device 400 is placed in receiving portion 510. As can be inferred from Fig. 4, centrally extending slot 520 may therefore provide access to input terminal 410 from a top surface of core 20. Given the depicted optional symmetric design of core 20 and casing 500, Fig. 4 is also representative for a bottom view of core 20, illustrating how output terminal 420 is likewise accessible from a bottom surface of core 20.

Alternatively or additionally, core 20 can comprise a sensor slot 26 configured to receive a sensor unit 300. In some implementations, a sensor unit 300 is configured as a temperature sensor. Such a temperature sensor is typically provided to determine the temperature of the liquid to be heated. Thus, in such implementations, it is preferred to position sensor slot 26 close to outer peripheral surface 22, to minimize a difference in the measured temperature and the temperature of the liquid to be heated. Specifically, sensor slot 26 can be positioned radially offset from the central longitudinal axis of core 20. More specifically, sensor slot 26 can be positioned radially offset from central slot 24. In some implementations, sensor unit 300 is provided in the form of a SMD (surface-mounted device) with an NTC (negative temperature coefficient) thermistor. In some implementations, sensor unit 300 is positioned in slot 26 and subsequently cast in a suitable resin to facilitate heat transfer between sensor unit 300 and core 22.

Alternatively or additionally, core 20 can comprise one or more additional slots 25, 27, 28, 29. In some implementations, at least a subset of the additional slots is provided to facilitate manufacture. For example, in implementations in which core 20 is made from a metal (such as aluminum) by extrusion pressing, slots 28 and 29 can be provided to facilitate that geometry and dimensions of slot 24 remain within required tolerances to ensure proper form-fitting of casing 500. Alternatively or additionally, one or more additional slots can be provided as cooling channels, for example by allowing air to circulate therethrough. In other implementations, in which such a cooling effect is not desired, but in which at least some of the one or more additional slots 25, 27, 28, 29 are required for manufacturing purposes, top and bottom ends of the one or more additional slots 25, 27, 28, 29 may be covered to prevent such circulation (not depicted).

Alternatively or additionally, circular slots 25 and 27 may be configured to receive additional or alternative thermal safety devices. For example, circular slots 25 and 27 may be threaded to enable receiving thermal safety devices with external threads.

### Further implementations of tubular flow heaters and their components

Specific examples and implementations of electrical heating elements and tubular flow heaters are described below with reference to Figs. 7 to 10.

Fig. 7 depicts a cross-section of an alternative implementation of a tubular flow heater, denoted by reference sign 600. In this implementation, a profiled casing tube 610 comprises a closed tubular portion 612 and a tab portion 614. Closed tubular portion 612 forms the heating element of the tubular flow heater and encloses a heat-conductive electrically insulating material 616, such as siliconized magnesium oxide (MgO), in which a resistive heater 620, such as a heating coil, is embedded. Tab portion 614 houses fluid tube 700 which can provide any one or more of the fluid conduits described elsewhere herein. Implementations of a tubular flow heater with a single, continuous casing tube housing both the fluid conduit and the electrical heating element can advantageously serve to provide a heating unit such as discussed above with reference for example to Figs. 1, 2A and 2B, which do not require a separate housing, such as housing 100 shown in Fig. 3A.

An implementation of resistive heater 620 is shown in a straightened view in Fig. 8. Implementations of a resistive heater 620 are generally known from the art, and comprise a coiled wire 622 acting as a heating coil and extending between respective electrical contact terminals 624, 626 on either end of resistive heater 620. Insulating beads 628, 630 are provided to allow electrically insulated mounting of resistive heater within profiled casing tube 610.

In some implementations of the disclosed technology, a tubular flow heater with a single, continuous casing tube housing both the fluid conduit and the electrical heating element can advantageously enable to provide a heating unit with staged heating, but without requiring two separate heating elements as discussed above with reference for example to Figs. 1, 2A and 2B. In some implementations, a resistive heater, such as resistive heater 620, is provided with at least two coaxially extending heating coils. For example, a first heating coil extends over an entire length of the resistive heater between terminals 624, 626, while a second heating coil coaxially with the first heating coil, but only for a portion of the entire length of the resistive heater. Such implementations provide a single resistive heater capable of providing at least two different heat flow rates along its length. Specifically, a first heat flow rate is provided in a portion in which the first and second heating coils extend coaxially, and a second heat flow rate is provided in a portion in which only the first heating coil extends. The first heat flow rate is effectively the sum of the heat flow rates of the first and second heating coils, and thus greater than the second heat flow rate. Such implementations can advantageously allow to provide a heating unit with staged heating, using only a single heating element, as opposed to the two separate heating elements as discussed above with reference for example to Figs. 1, 2A and 2B. Such implementations are also advantageous for use with a single fluid tube, such as tube 90 of Fig. 3C. In such implementations, the heating unit effectively lacks a connection conduit, such as conduit 92, because the heating unit lacks a second tubular flow heater, to which the fluid heated in a first stage would have to be transferred for a second stage of heating. Instead, the first and second heating stage are integrated into a single tubular flow heater capable of providing two separate heat flow rates along its length.

In other implementations, a heating element with at least two coaxial resistive heaters can be provided as a separate unit with its own housing, similar to heating elements 60, 80 depicted in Fig. 3B. In such implementations, a heating unit capable of staged heating, using only a single heating element, can be packaged with a separate fluid tube, such as tube 90 of Fig. 3C, in a separate housing, such as housing 100 of Fig. 3A.

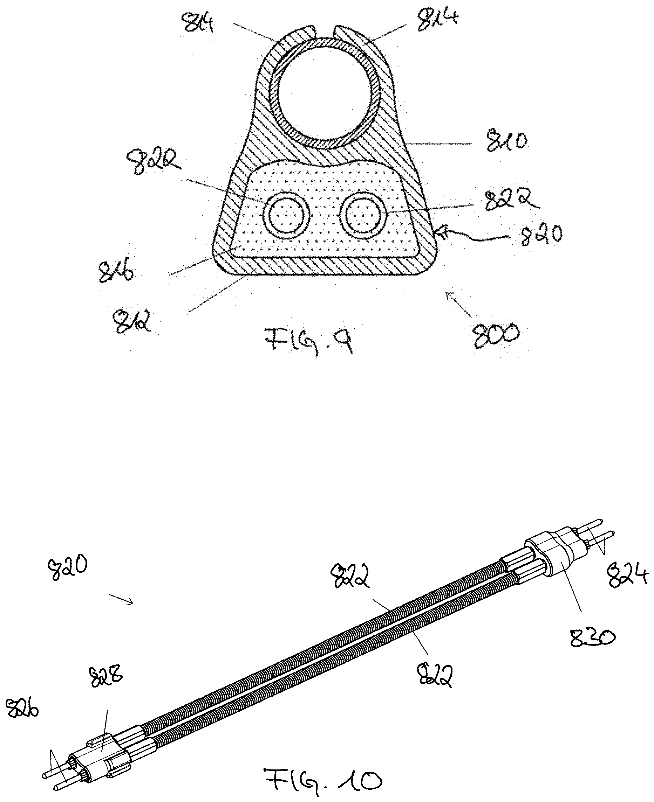

Fig. 9 depicts an implementation of a tubular flow heater 800, generally similar to that of Fig. 7 in that it also comprises a profiled casing tube 810 with a closed tubular portion 812 and a tab portion 814, the former housing a resistive heater 820 (shown in Fig. 10) embedded in a heat-conductive electrically insulating material 816, and the latter housing a fluid tube. Profiled casing tube 800 optionally differs from that of Fig. 7 in that a pair of tab portions 814 are provided.

Moreover, as further detailed with reference to Fig. 10, resistive heater 820 differs from that of Fig. 8 in that a pair of resistive heaters 822, such as heating coils, extend in parallel between respective pairs of connecting terminals 824, 826. Insulating beads 828, 830 are geometrically adapted to the parallel design of Fig. 10, but otherwise functionally identical to those of Fig. 8.

In some implementations of the disclosed technology, a heating element with two or more parallel resistive heaters can enable providing at least two different heat flow rates along its length. Specifically, in some implementations, a first heat flow rate is provided in a portion in which the first and second heating coils extend in parallel, and a second heat flow rate is provided in a portion in which only the first heating coil extends. The first heat flow rate is effectively the sum of the heat flow rates of the first and second heating coils, and thus greater than the second heat flow rate. Such implementations can advantageously allow to provide a heating unit with staged heating, using only a single heating element, as opposed to the two separate heating elements as discussed above with reference for example to Figs. 1, 2A and 2B. Such implementations are also advantageous for use with a single fluid tube, such as tube 90 of Fig. 3C. In such implementations, the heating unit effectively lacks a connection conduit, such as conduit 92, because the heating unit lacks a second tubular flow heater, to which the fluid heated in a first stage would have to be transferred for a second stage of heating. Instead, the first and second heating stages are integrated into a single tubular flow heater capable of providing two separate heat flow rates along its length.

In other implementations, a heating element with at least two parallel resistive heaters can be provided as a separate unit with its own housing, similar to heating elements 60, 80 depicted in Fig. 3B. In such implementations, a heating unit capable of staged heating, using only a single heating element, can be packaged with a separate fluid tube, such as tube 90 of Fig. 3C, in a separate housing, such as housing 100 of Fig. 3A.

Further aspects and implementations of the disclosed technology are set forth in the appended claims.

### LIST OF REFERENCE SIGNS

- 10A: Heating unit
- 10B: heating unit
- 10C: heating unit
- 12: interior volume
- 20: core
- 22: lateral (or radially outer) surface
- 24: centrally extending slot
- 25: additional slot
- 26: sensor slot
- 27: additional slot
- 28: additional slot
- 29: additional slot
- 30: first tubular flow heater
- 40: second tubular flow heater
- 50: first fluid conduit
- 52: first inlet
- 54: first outlet
- 60: first heating element
- 62: fluid conduit receiving portion
- 64: electrical contact terminal
- 66: electrical contact terminal
- 68: casing tube
- 70: second fluid conduit
- 72: second inlet
- 74: second outlet
- 80: second heating element
- 82: fluid conduit receiving portion
- 84: electrical contact terminal
- 86: electrical contact terminal
- 88: casing tube
- 90: flow pipe
- 92: connection conduit
- 100: heating assembly housing
- 110: lower section
- 120: upper section
- 130: intermediate section
- 132: shielding portion
- 134: open portion
- 140: radially inner surface
- 200: safety device assembly
- 300: sensor unit
- 400: safety device
- 410: input terminal
- 420: output terminal
- 430: fuse portion
- 432: top surface
- 500: casing
- 510: receiving portion
- 512: central portion
- 516: abutting portion
- 520: centrally extending slot
- 524: laterally extending portion
- 600: tubular flow heater
- 610: casing tube
- 612: closed tubular portion
- 614: tab portion
- 616: heat-conductive electrically insulating material
- 620: resistive heater
- 622: coiled wire
- 624: electrical contact terminal
- 626: electrical contact terminal
- 628: insulating bead
- 630: insulating bead
- 700: houses fluid tube
- 800: tubular flow heater
- 810: casing tube
- 812: closed tubular portion
- 814: tab portion
- 816: heat-conductive electrically insulating material
- 820: resistive heater
- 822: heating coil
- 824: connecting terminal
- 826: connecting terminal
- L: longitudinal axis

## Claims

1. A heating unit for use in an apparatus for preparing a liquid for human consumption, the heating unit comprising:
a first tubular flow heater (30) comprising:
a first fluid conduit (50) for passage of a liquid to be heated, the first fluid conduit (50) extending between a first fluid inlet (52) and a first fluid outlet (54); and
a first electric heating element (60) extending at least partially along the first fluid conduit (50) between the first fluid inlet (52) and the first fluid outlet (54), the first electric heating element (60) arranged in thermal contact with the first fluid conduit (50);
wherein the first fluid conduit (50) and the first heating element are helically wound around a common first longitudinal axis (L);
a second tubular flow heater (40) comprising:
a second fluid conduit (70) for passage of the liquid to be heated, the second fluid conduit (70) extending between a second fluid inlet (72) and a second fluid outlet (74); and
a second electric heating element (80) extending at least partially along the second fluid conduit (70) between the second fluid inlet (72) and the second fluid outlet (74), the second electric heating element (80) arranged in thermal contact with the second fluid conduit (70);
wherein the second fluid conduit (70) and the second heating element are helically wound around a common second longitudinal axis (L); and
a connection conduit (92) for passage of the liquid to be heated, the connection conduit (92) fluidly connecting the first fluid outlet (54) with the second fluid inlet (72).

2. The heating unit of claim 1, wherein the first fluid conduit (50), the second fluid conduit (70) and the connection conduit (92) are formed from a single tube (90).

3. The heating unit of any one of claims 1 or 2, wherein the first longitudinal axis (L) coincides with the second longitudinal axis (L).

4. The heating unit of any one of claims 1 to 3, wherein the first electric heating element (60) and the second electric heating element (80) are electrically connected in parallel.

5. The heating unit of any one of claims 1 to 3, wherein the first electric heating element (60) and the second electric heating element (80) are electrically connected in series.

6. A heating unit for use in an apparatus for preparing a liquid for human consumption, the heating unit comprising:
at least a first tubular flow heater (30) comprising:
a first fluid conduit (50) for passage of a liquid to be heated, the first fluid conduit (50) extending between a first fluid inlet (52) and a first fluid outlet (54); and
a first electric heating element (60) extending at least partially along the first fluid conduit (50) between the first fluid inlet (52) and the first fluid outlet (54), the first electric heating element (60) arranged in thermal contact with the first fluid conduit (50);
wherein the first fluid conduit (50) and the first heating element are helically wound around a common first longitudinal axis (L), thereby forming a plurality of windings enclosing a first interior volume; and
a core (20) positioned within the first interior volume and having a lateral surface (22) circumferentially extending around the first longitudinal axis (L);
wherein the lateral surface (22) of the core (20) contacts an inner surface of the plurality of windings over an arc length corresponding to at least one full winding.

7. The heating unit of claim 6, wherein the core (20) comprises one or more receiving portions (24, 25, 26, 28, 29), each configured to receive one or more auxiliary devices (200, 300).

8. The heating unit of claim 7, wherein at least one of the one or more receiving portions (24, 25, 26, 28, 29) is provided in the form of a slot shaped to receive a safety device assembly (200).

9. The heating unit of claim 8, wherein the safety device assembly (200) comprises a casing (500) and a safety device received within the casing (500).

10. The heating unit of claim 9, wherein the casing (500) comprises a slot configured to provide access to at least one of an input terminal (410) and an output terminal (420) of the safety device received within the casing (500).

11. A hot beverage apparatus comprising a heating unit according to any one of claims 1 to 10.

12. A method of preparing a fluid for human consumption, the method comprising the steps of:
supplying a fluid having a first temperature to a helically shaped first fluid conduit (50);
subjecting the fluid to a first heat flow rate while the fluid is present in the first fluid conduit (50) to change the temperature of the fluid to a second temperature;
subsequently supplying the fluid to a helically shaped second fluid conduit (70);
subjecting the fluid to a second heat flow rate while the fluid is present in the second fluid conduit (70) to change the temperature of the fluid to a third temperature.

13. The method of claim 12, wherein the second temperature is greater than the first temperature and/or wherein the third temperature is greater than the second temperature.

14. The method of any one of claims 12 or 13, wherein the first and second heat flow rates are equal and/or wherein the first heat flow rate is constant over the length of the first fluid conduit (50) and/or wherein the second heat flow rate is constant over the length of the second fluid conduit (70).

15. A hot beverage apparatus configured to prepare a fluid for human consumption according to the method of any one of claims 12 to 14.
